(19) Europäisches Patentamt
European Patent Office
Office européen des brevets

(11) Veröffentlichungsnummer: **0 043 471**
**B1**

(12) **EUROPÄISCHE PATENTSCHRIFT**

(45) Veröffentlichungstag der Patentschrift: **28.05.86**

(51) Int. Cl.$^4$: **C 10 B 53/00,** C 10 L 10/00, C 02 F 11/10, B 09 B 3/00

(21) Anmeldenummer: **81104665.5**

(22) Anmeldetag: **16.06.81**

# (54) Verfahren zur Einbindung säurebildender Substanzen, die bei der Pyrolyse von organische Stoffe enthaltenden Abfällen entstehen, in den Rückstand.

(30) Priorität: **03.07.80 DE 3025263**

(43) Veröffentlichungstag der Anmeldung:
**13.01.82 Patentblatt 82/02**

(45) Bekanntmachung des Hinweises auf die Patenterteilung:
**28.05.86 Patentblatt 86/22**

(84) Benannte Vertragsstaaten:
**AT BE CH DE FR GB IT LI NL SE**

(56) Entgegenhaltungen:
**FR-A- 827 826**
**GB-A-1 286 595**
**GB-A-1 569 152**
**US-A-4 111 755**

(73) Patentinhaber: **Deutsche Kommunal-Anlagen Miete GmbH**
**Candidplatz 9-11**
**D-8000 München 90 (DE)**

(72) Erfinder: **Hillekamp, Klaus, Dr.**
**Musäusstrasse 3**
**D-8000 München 60 (DE)**

**EP 0 043 471 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft ein Verfahren zur Einbindung säurebildender Substanzen, die bei der Pyrolyse von wasserhaltigen, organische Stoffe enthaltenden Abfällen entstehen, mit Hilfe von säurebindenden Stoffen, in den dabei entstehenden Rückstand.

Es ist bekannt, organische Stoffe, insbesondere Abfälle mit ausreichendem organischen Anteil, thermisch unter Luftausschluß unter Bildung von Ölen, Gasen, Teeren und eines kohlenstoffhaltigen Rückstandes zu zersetzen. Diese Verfahren dienen einmal dazu, aus organischen Stoffen Rohstoffe zu gewinnen, z.B. Aktivkohle aus Holz, oder Abfälle thermisch zu hygienisieren und zu mineralisieren oder Wertstoffe aus den Abfällen zu gewinnen.

Enthalten die eingesetzten Stoffe Chlor, Schwefel oder Fluor, so entstehen bei der thermischen Zersetzung saure Gase in Form von Chlorwasserstoff, Fluorwasserstoff, Schwefelwasserstoff und Schwefeldioxid.

Diese bei Anwesenheit von Wasser sauer reagierenden Verbindungen stellen ein verfahrenstechnisches und umweltrelevantes Problem dar. Verfahrenstechnisch führen sie bei Kondensation der Gase und Öle zu sauren Lösungen, die korrodierend wirken. In die Atmosphäre entlassen, wirken die Substanzen als umweltrelevante Schadstoffe auf Pflanzen, Tiere und Menchen. Bei Gaswäschern gelangen die sauren Stoffe in das Wasser und stellen hier wieder eine Belastung der Abwässer dar.

Es besteht daher ein dringendes Bedürfnis, die Emission der säurebildenden Substanzen HCl, HF, $SO_2$, $H_2S$ und dgl. aus der thermischen Zersetzung von organischen Stoffen in die Gasphase zu vermeiden.

Aus der GB—A—1569 152 ein Verfahren zur Reinigung von metallischen Gegenständen von halogenhaltigen Kunststoffüberzügen durch thermische Behandlung im Wirbelbett unter Zusatz alkalisch reagierender Stoffe bekannt. Beim erfindungsgemäßen Verfahren werden jedoch wasserhaltige Abfälle eingesetzt, so daß unterschiedliche Reaktionsbedingungen vorliegen.

Aus der GB—A—1 286 595 ist weiterhin ein Verfahren zur Zersetzung von Abfällen durch indirekte Erhitzung auf 700—1.200°C bekannt, bei dem unter Zugabe alkalisch reagierender Verbindungen oder von Verbindungen, die alkalisch reagieren, wenn sie zersetzt werden, säurebildende Substanzen in den Rückstand eingebunden werden.

Als Beispiele von Abfallstoffen werden Küchenabfälle und Schlachthofabfälle angeführt.

Als geeignetes alkalisch reagierendes Produkt wird Kalk, Calciumcarbonat, eingesetzt.

Die Einbindung des Chlorwasserstoffes mit Ca-Verbindungen findet nach folgender Reaktionsgleichung statt:

$$Ca(OH)_2 + 2\,HCl \rightleftharpoons CaCl_2 + 2\,H_2O.$$

Aufgrund des Feuchtigkeitsgehaltes der thermisch zu behandelnden organischen Stoffe und des daraus resultierenden Wasserdampfgehaltes im Reaktionsraum wird das Reaktionsgleichgewicht durch Hydrolyse des gebildeten Calciumchloride bei stöchiometrischem Mengenverhältnis und bei den Reaktionstemperaturen weitestgehend auf die linke Seite der Reaktionsgleichung verschoben. Zur wirksamen Einbindung von Chlorwasserstoff muß deshalb mit erheblichem stöchiometrischen Überschuß an Calciumverbindungen gearbeitet werden.

Diese erheblichen Mengen an Calciumverbindungen, die zur wirksamen Einbindung von Chlorwasserstoff erforderlich sind, tragen zur Erhöhung des Gesamtgewichts der zu beseitigenden Rückstände bei und verursachen dementsprechend Probleme hinsichtlich der Lagerhaltung und des Transportes der Zuschlagstoffe sowie des benötigten Deponiervolumens für die Rückstände.

Außerdem belasten sie die Wirksamkeit des Verfahrens und setzen die Leistungsfähigkeit des Reaktors durch die Mitbehandlung von zusätzlichem Ballastmaterial herab.

Hinzu kommt bei den angegebenen Calciumverbindungen, daß sie nur in geringem Maße wasserlöslich sind. Sie können deshalb entweder nur als Suspensionen, z.B. bei Verwendung von Kalkhydrat, oder staubförmig zugesetzt werden. Damit wird eine intensive und innige Vermischung des Kalkhydrats mit den organischen Stoffen erheblich erschwert.

Aufgabe der Erfindung ist es deshalb, ein Verfahren zur Einbindung der bei der Zersetzung von organischen Stoffen frei werdenden säurebildenden Substanzen in den Rückstand zu schaffen, bei dem man bezüglich der Zugabe säurebindender Substanzen mit einem wesentlich günstigeren stöchiometrischen Mengenverhältnis auskommt.

Diese Aufgabe wird bei dem Verfahren der eingangs genannten Art erfindungsgemäß dadurch gelöst, daß man säurebindende Alkaliverbindungen zusetzt, die mit den bei der Zersetzung der Abfälle freiwerdenden säurebildenden Substanzen unter Bildung von hydrolysebeständigen und thermisch beständigen Salzen reagieren.

Dadurch, daß die Reaktionsprodukte bei den Reaktionstemperaturen hydrolysebeständig sind, lassen sich günstige stöchiometrische Mengenverhältnisse erzielen.

Als säurebindende Alkaliverbindungen eignen sich insbesondere Alkalihydroxide, Alkalicarbonate und Alkalibicarbonate. Mit besonderem Vorteil lassen sich Natriumhydroxid, Natriumbicarbonat und/oder Natriumcarbonat einsetzen.

Weiterhin eignen sich vorteilhafterweise potentiell säurebindende Alkaliverbindungen, Verbindungen die bei erhöhter Temperatur reaktiv werden oder die sich durch thermische Einwirkung unter Bildung von basisch reagierenden Alkalioxiden zersetzen und dann mit den frei werdenden säurebildenden Substanzen direkt unter Bildung von hydrolysebeständigen, thermisch stabilen Salzen reagieren. Weiter eigenen sich potentiell säurebindende Alkaliverbindungen, die sich bei erhöhter Temperatur durch Reaktion mit organischen Stoffen unter Freisetzung von basisch reagierenden Metalloxiden zersetzen, welche mit den bei der Zersetzung der organischen Stoffe entstehenden säurebildenden Substanzen unter Bildung von hydrolysebeständigen thermisch stabilen Salzen reagieren.

Unter potentiell säurebindenden Alkaliverbindungen werden somit Alkaliverbindungen verstanden, die bei normalen Temperaturen nich basisch reagieren und erst durch Zersetzung oder erhöhte Temperaturen basische, d.h. säurebindende Eigenschaften, entwickeln.

Als potentiell säurebindende Alkaliverbindungen eignen sich vorteilhafterweise organische Salze, die sich bei erhöhter Temperatur im Pyrolysebereich organischer Stoffe zersetzen, da aus den festen Stoffen durch Zersetzung, die unter Gasentwicklung vor sich geht, hochaktives oberflächenreiches Material entsteht, das im besonderen Maße mit den säurebildenden Substanzen der Pyrolysereaktionsprodukte reagiert. Die hohe Oberfläche und der poröse Charakter des jeweiligen Korns sind die Voraussetzung für eine gute Umsetzung der basisch reagierenden Metalloxide mit den sauer reagierenden Substanzen der Pyrolyseprodukte.

Die Zersetzung geht dabei so vor sich, daß der organische Säurerest unter Bildung von gasförmigen und festen Produkten, die auch bei der Pyrolyse der organischen Stoffen entstehen, zerlegt wird. Gleichzeitig wird aus den nicht basischen organischen Salzen die Metallkomponente in Form basisch reagierender Sauerstoffverbindungen freigesetzt.

Die Metallkomponente liegt dabei als oberflächenreiches, feinverteiltes Produkt vor, das besonders günstig mit sauer reagierenden Substanzen der Pyrolyseprodukte reagiert.

Als säurebindende oder potentiell säurebindende Alkaliverbindungen werden bevorzugt im Temperaturbereich von 200—800°C, insbesondere von 250—720°C, schmelzende Salze zugesetzt.

Als potentiell säurebindende Substanzen kommen vorzugsweise Alkalisalze organischer Säuren, Alkalialkoholate, Alkalialkyle und/oder organische Komplexverbindungen von Alkaliverbindungen zum Einsatz.

Geeignete Salze organischer Säuren sind die Alkalisalze einbasischer oder mehrbasischer Säuren.

Besonders geeignet sind die Alkalisalze der Ameisensäure, der Essigsäure, Oxalsäure und Weinsäure. Im einzelnen sind besonders geeignet Natrium- und Kaliumformiat, Natrium- und Kaliumacetat sowie Natriumoxalat. Von den organischen Komplexverbindungen ist Äthylendinitrilotetraessigsäuredikalium-magnesium besonders geeignet.

Eine vorteilhafte Ausführungsform des erfindungsgemäßen Verfahrens besteht darin, daß man als potentiell säurebindende Substanzen oxydierend wirkende Alkalisalze anorganischer Säuren zusetzt.

Derartige Verbindungen sind die Alkalisalze der salpetrigen Säure und der Salpetersäure, d.h. die Alkalinitrite und -nitrate. Besonders geeignete Verbindungen sind Natriumnitrit, Natriumnitrat, Kaliumnitrat und Kaliumnitrit.

Bei der oxidativen Reaktion der Nitrite und Nitrate mit den organischen Substanzen werden bei den Pyrolysetemperaturen von 200—800°C basisch reagierende Metalloxide in fein verteilter Form freigesetzt, die rasch und vollständig mit den bei der Zersetzung frei werdenden säurebildenden Verbindungen reagieren.

Eine geeignete Verbindung im Sinne der Erfindung ist auch Natriumperoxid.

Zweckmäßigerweise werden die säurebindenden Alkaliverbindungen in gelöster Form oder als Pulver in den Reaktionsraum eingebracht. Die Zugabe erfolgt in 0,25—10 fach vorzugzweise 0,5—5 fach stöchiometrischer Menge, bezogen auf die einzubindende Säure oder die einzubindenden Säuren.

Mit Vorteil können im Pyrolysebereich von 200—600°C schmelzende Salze organischer Säuren oder oxidierend wirkender anorganischer Säuren eingesetzt werden. Schmelzen derartige Verbindungen, so verteilen sie sich in dünnflüssiger Form sehr leicht in den organischen Materialien und liegen dann in feinstverteilter Form in der gesamten organischen Masse vor. Dies schafft nicht nur eine hohe Reaktionsfähigkeit, sondern eine extrem gleichmäßige Verteilung.

Auch eutektische Gemische der säurebindenden Alkaliverbindungen können verwendet werden. Besonders geeignet sind auch die eutektischen Gemische verschiedener Salze, insbesondere das sehr niedrig schmelzende Gemisch aus Natriumnitrit, Kalium- und Natriumnitrat.

Eine Explosionsgefahr oder heftige Reaktion der oxidierend wirkenden Salze mit den organischen Stoffen besteht nicht, da sie in derart geringen Mengen eingesetzt werden, so daß die unter Wärmeabgabe verlaufende Reaktion den Gesamtwärmehaushalt des Systems kaum beeinflußt.

Verstärkt werden kann diese gleichmäßige und intensive Verteilung über die gesamte zu behandelnde organische Masse noch dadurch, daß die angeführten Salze der organischen Säuren und der oxidierend wirkenden anorganischen Säuren im hohen Maße wasserlöslich sind und deshalb als wässrige Lösungen den zu behandelnden organischen Substanzen in hoher wässriger Konzentration zugesetzt werden können. Bei der pyrolytischen Behandlung wird zuerst die geringe Menge Wasser verdampft und die Salze verbleiben in den organischen Stoffen. Anschließend treten dann die bereits angeführten Zersetzungen und oxidativen Reaktionen bzw. Reaktionen mit den freigesetzten sauer reagierenden Verbindungen der Pyrolyseprodukte ein.

Die potentiell säurebindenden Alkaliverbindungen können der organischen Masse, die pyrolytisch zu behandeln ist, an verschiedenen Stellen des Prozesses zugesetzt werden. Sie können den organischen Stoffen vor der Einführung in den Reaktor, in welchem die thermische Behandlung, insbesondere Pyrolyse, durchgeführt wird, entweder in fester oder in gelöster Form zugegeben werden. Andererseits ist es auch möglich, diese Substanzen über geeignete Zugabevorrichtungen auch an beliebigen Stellen des Reaktors einzubringen. Bei stark schwankender Freisetzung von sauer reagierenden Substanzen ist es empfehlenswert, die potentiell säurebindenden Alkaliverbindungen in gelöster Form in den Heißteil des Pyrolysereaktors bei Temperaturen oberhalb 300°C zuzusetzen. Es tritt dann eine sofortige Umsetzung mit den sauer reagierenden Substanzen ein.

Neben dem Einsatz von Einzelsubstanzen ist es auch möglich, die angeführten potentiell säurebindenden Alkaliverbindungen im Gemisch miteinander einzusetzten. Dies betrifft insbesondere die oxidierend wirkenden anorganischen Alkaliverbindungen.

Die angeführten säurebindenden und/oder potentiell säurebindenden Substanzen können bei allen Verfahren zur pyrolytischen Zersetzung von Abfallstoffen zugesetzt werden, um säurebildende Substanzen aus der thermischen Behandlung organischer Stoffe in den Rückstand einzubinden. Das erfindungsgemäße Verfahren kann somit zur Entgasung von Hausmüll, Altreifen, Altöl, Klärschlamm, organischen Shredderrückständen, Kunststoffen, Säureharzen, Lackrückständen, Altkabel und dgl. eingesetzt werden.

Zur Rückstandsverdichtung können zusätzlich zu den säurebindenden und/oder potentiell säurebindenden Verbindungen Calciumverbindungen zugesetzt werden.

Vergleichsbeispiel 1

Ein Gemisch aus 96,5 g Cellulose und 3,5 g Polyvinychlorid, das nicht stabilisiert war und dessen Chlorgehalt 57 % betrug, wurde unter Luftausschluß innerhalb 45 Minuten gleichmäßig von 20°C auf 650°C erhitzt. Es hinterblieb ein schwarzer Rückstand, der nur noch 5 % des mit dem Polyvinylchlorid eingeführten Chlors enthielt. 95 % des eingesetzten Chlors waren mit den Pyrolysegasen emittiert worden.

Vergleichsbeispiel 2

Es wurde wieder ein Gemisch aus 96,5 g Cellulose und 3,5 g Polyvinylchlorid (Chlorgehalt 57 %) eingesetzt. Diesem Gemisch wurden noch 2,1 g feinpulveriges Kalkhydrat, $Ca(OH)_2$, (stöchiometrisches Verhältnis 1 zu Chlorwasserstoff) zugegeben und gut durchmischt.

Das Gemisch wurde innerhalb 45 Minuten unter Luftausschluß auf 650°C erhitzt. Es hinterblieb ein schwarzer Rückstand, der 23 % des eingesetzten Chlors enthielt. 77 % des eingebrachten Chlors waren mit den Pyrolysegasen emittiert worden.

Vergleichsbeispiel 3

Es wurde ein Gemisch aus 96,5 g Cellulose, 3,5 g Polyvinylchlorid (Chlorgehalt 57 %) und 3,65 g Calciumformiat (stöchiometrisches Verhältnis 1 zu Chlorwasserstoff) hergestellt. Dieses Gemisch wurde entsprechend den Versuchen 1 und 2 unter Luftausschluß innerhalb 45 Minuten von 20°C auf 650°C erhitzt. Im schwarzen Rückstand konnten 35 % des eingesetzten Chlors nachgewiesen werden.

65 % des eingebrachten Chlors waren mit den Pyrolysegasen emittiert worden. Gegenüber Kalkhydrat war eine eindeutige Verbesserung der Chlorwasserstoffeinbindung feststellbar.

Beispiel 1

Es wurde ein Gemisch aus 96,5 g Cellulose, 3,5 g Polyvinylchlorid (Chlorgehalt 57 %) und 3,8 g Natriumformiat hergestellt (stöchiometrisches Verhältnis 1 zu Chlorwasserstoff). Dieses Gemisch wurde entsprechend den vorhergehenden Versuchen unter Luftausschluß innerhalb 45 Minuten von 20°C auf 650°C erhitzt. Es hinterblieb ein schwarzer Rückstand, der 93 % des eingebrachten Chlors enthielt. Nur 7 % des eingesetzten Chlors waren mit den Pyrolysegasen emittiert worden. Bei einer derartig hohen Einbindung des Chlors in den Rückstand ist der Chlorwasserstoffgehalt des Pyrolysegases so niedrig, daß bei der Verbrennung desselben ein Abgas entsteht, dessen HCl-Gehalt weniger als 100 $mg/Nm^3$ beträgt. Damit kann auf eine eigene Gasreinigung verzichtet werden.

Beispiel 2

Es wurde ein Gemisch aus 96,5 g Cellulose, 3,5 g Polyvinylchlorid (Chlorgehalt 57 %) und 3,88 g Natriumnitrit hergestellt (stöchiometrisches Verhältnis 1 zu Chlorwasserstoff). Dieses Gemisch wurde entsprechend den vorhergehenden Versuchen unter Luftausschluß innerhalb 45 Minuten von 20°C auf 650°C erhitzt. Es hinterblieb ein schwarzer Rückstand, der 84 % des eingesetzten Chlors enthielt. Nur 16 % des eingesetzten Chlors waren mit den Pyrolysegasen emittiert worden.

**Patentansprüche**

1. Verfahren zur Einbindung säurebildender Substanzen, die bei der Pyrolyse von wasserhaltigen, organische Stoffe enthaltenden Abfällen entstehen, mit Hilfe von säurebindenden Stoffen in den dabei entstehenden Rückstand, dadurch gekennzeichnet, daß man säurebindende Alkaliverbindungen zusetzt, die mit den bei der Zersetzung der Abfälle freiwerdenden säurebildenden Substanzen unter Bildung zon hydrolysebeständigen und thermisch beständigen Salzen reagieren.

2. Verfahren nach Anspruch 1, dadurch gekennzeichnet, daß man potentiell säurebindende Alkaliverbindungen zusetzt, die bei erhöhter Temperatur reaktiv werden oder sich durch thermische Einwirkung zersetzen und mit den freiwerdenden säurebildenden Substanzen direkt unter Bildung von hydrolysebeständigen, thermisch stabilen Salzen reagieren.

3. Verfahren nach Anspruch 1, dadurch gekennzeichnet, daß man potentiell säurebindende Alkaliverbindungen zusetzt, die sich bei erhöhter Temperatur durch Reaktion mit organischen Stoffen unter Freisetzung von basisch reagierenden Metalloxiden zersetzen, welche mit den bei der Zersetzung der organischen Stoffe entstehenden säurebildenden Substanzen unter Bildung von hydrolysebeständigen thermisch stabilen Salzen reagieren.

4. Verfahren nach einem der vorstehenden Ansprüche, dadurch gekennzeichnet, daß als säurebindende und/oder potentiell säurebindende Alkaliverbindungen im Temperaturbereich von 200—800°C, insbesondere von 250—720°C, schmelzende Salze zugesetzt werden.

5. Verfahren nach Anspruch 2, 3 oder 4, dadurch gekennzeichnet, daß als potentiell säurebindende Substanzen Alkalisalze organischer Säuren, Alkalialkoholate, Alkalialkyle und/oder organische Komplexverbindungen von Alkaliverbindungen zugesetzt werden.

6. Verfahren nach einem der Ansprüche 2 bis 5, dadurch gekennzeichnet, daß Alkaliformiate und -acetate verwendet werden.

7. Verfahren nach einem der Ansprüche 2 bis 4, dadurch gekennzeichnet, daß als potentiell säurebindende Substanzen oxidierend wirkende Alkalisalze anorganischer Säuren zugesetzt werden.

8. Verfahren nach Anspruch 1 oder 7, dadurch gekennzeichnet, daß Alkalinitrite und -nitrate verwendet werden.

9. Verfahren nach Anspruch 1, dadurch gekennzeichnet, daß man Natriumhydroxid, Natriumbicarbonat und/oder Natriumcarbonat verwendet.

10. Verfahren nach einem der Ansprüche 1 bis 9, dadurch gekennzeichnet, daß eutektische Gemische der säurebindenden Alkaliverbindungen verwendet werden.

11. Verfahren nach Anspruch 6 oder 8, dadurch gekennzeichnet, daß Natriumformiat oder Natriumnitrit verwendet wird.

## Revendications

1. Procédé pour intéger des substances acidifiantes se produisant lors de la pyrolyse de déchets hydratés qui contiennent des éléments organiques, à l'aide d'éléments acidifiants dans le résidu s'y produisant caractérisé en ce que l'on ajoute des composés alcalins liant des acides qui réagissent avec les substances acidifiantes se dégageant lors de la décomposition des déchets sous formation de sels thermiquement stables et résistants à l'hydrolyse.

2. Procédé selon révendication 1 caractérisé en ce que l'on ajoute des composés alcalins liant potentiellement les acides qui deviennent réactifs à une température plus élevée ou qui se décomposent par l'influence thermique et qui réagissent directement avec les substances acidifiantes qui se dégagent sous formation de sels thermiquement stables et résistants à l'hydrolyse.

3. Procédé selon révendication 1 caractérisé en ce que l'on ajoute des composés alcalins liant potentiellement les acides lesquels se décomposent à des températures plus élevées suite à la réaction avec des éléments organiques en dégageant des oxydes métalliques à réaction basique qui réagissent avec les substances acidifiantes se produisant lors de la décomposition des éléments organiques en formant des sels thermiquement stables et résistants à l'hydrolyse.

4. Procédé selon une des révendications précédentes caractérisé en ce que des sels qui fondent dans la gamme de température entre 200° et 800°C, particulièrement entre 250° et 720°C sont ajoutés comme composés alcalins liant potentiellement les acides et/ou liant des acides.

5. Procédé selon révendication 2, 3 ou 4 caractérisé en ce que l'on ajoute comme substances liant potentiellement les acides des sels alcalins provenant des acides organiques, des alcoolats alcalins, des alkoyles alcalins et/ou des combinaisons complexes organiques provenant de composés alcalins.

6. Procédé selon une des révendications 2 à 5 caractérisé en ce que des formiates et acétates alcalins sont utilisés.

7. Procédé selon une des révendications 2 à 4 caractérisé en ce que des sels alcalins à effet oxydant provenant d'acides inorganiques sont ajoutés comme substances liant potentiellement les acides.

8. Procédé selon révendication 1 ou 7 caractérisé en ce que des nitrites et des nitrates alcalins sont utilisés.

9. Procédé selon révendication 1 caractérisé en ce que de l'hydroxyde de sodium, du bicarbonate et/ou du carbonate de sodium sont utilisés.

10. Procédé selon une des révendications 1 à 9 caractérisé en ce que des mélanges eutectiques provenant des composés alcalins liant des acides sont utilisés.

11. Procédé selon révendications 6 ou 8 caractérisé en ce que du formiate de sodium ou du nitrite de sodium sont utilisés.

## Claims

1. Procedure for the binding of acid producing substances, which are produced during the pyrolysis of waste containing hydrogenous, organic material, with the help of acid binding material in the residue thus being produced, characterized in that acid binding alkali compounds are added, which under the production of hydrolytically stable and thermally stable salts react with acid producing substances being liberated during the decomposition of the waste.

2. Procedure according to claim 1 characterized in that potentially acid binding alkali compounds are added, which are going to be reactive at a higher temperature or decomposed by thermal influence, and under the production of hydrolytically stable, thermally stable salts react directly with the acid forming substances being liberated.

3. Procedure according to claim 1 characterized in that potentially acid binding alkali compounds are added, which are decomposed at a higher temperature by the reaction with organic material under the liberation of basically reacting metallic oxides, which under the production of hydrolytically stable, thermally stable salts react with the acid forming substances being produced during the decomposition of the organic material.

4. Procedure according to any preceding claim characterized in that melting salts are added as acid binding and/or potentially acid binding alkali compounds within a temperature ranging from 200—800°C, especially from 250—720°C.

5. Procedure according to claim 2, 3 or 4 characterized in that alkali salts of organic acids, alkali alcoholates, alkali alcyls and/or organic complex compounds of alkali compounds are added as potentially acid binding substances.

6. Procedure according to any of the claims 2 to 5, characterized in that alkali formiates and -acetates are used.

7. Procedure according to any of the claims 2 to 4 characterized in that as oxidants used alkali salts of anorganic acids are added as potentially acid binding substances.

8. Procedure according to claim 1 or 7 characterized in that alkali nitrites and -nitrates are used.

9. Procedure according to claim 1 characterized in that natrium hydroxide, natrium bicarbonate and/or natrium carbonate are used.

10. Procedure according to any preceding claim characterized in that eutectical mixtures of acid binding alkali compounds are used.

11. Procedure according to claim 6 to 8 characterized in that natrium formiate or natrium nitrite are used.